Europäisches Patentamt

European Patent Office

Office européen des brevets

(19)

(11) **EP 0 526 915 B1**

(12) # EUROPEAN PATENT SPECIFICATION

(45) Date of publication and mention
of the grant of the patent:
**26.06.1996 Bulletin 1996/26**

(51) Int Cl.$^6$: **H02P 5/40**, H02P 5/408

(21) Application number: **92118267.1**

(22) Date of filing: **07.09.1988**

(54) **Control system for controlling revolution speed of electric motor**

Regelsystem zur Geschwindigkeitsregelung eines elektrischen Motors

Système de régulation pour commander la vitesse de rotation d'un moteur électrique

(84) Designated Contracting States:
**DE FR GB**

(30) Priority: 08.09.1987 JP 224500/87
10.09.1987 JP 227035/87
19.10.1987 JP 263167/87
19.10.1987 JP 263168/87
11.03.1988 JP 58000/88
24.06.1988 JP 83724/88

(43) Date of publication of application:
**10.02.1993 Bulletin 1993/06**

(62) Application number of earlier application in
accordance with Art. 76 EPC: **88114617.9**

(73) Proprietor: **Kabushiki Kaisha Meidensha
Shinagawa-ku Tokyo 141 (JP)**

(72) Inventors:
• **Nomura, Masakatsu
Kamakura-shi, Kanagawa-ken (JP)**
• **Ashikaga, Tadashi
Tokyo (JP)**
• **Hori, Michitaka
Tokyo (JP)**
• **Mizuno, Takayuki
Nishikasugai-gun, Aichi-ken (JP)**
• **Ichioka, Tadashi
Ichinomiya-shi, Aichi-ken (JP)**

(74) Representative: **Dipl.-Phys.Dr. Manitz
Dipl.-Ing. Finsterwald Dipl.-Ing. Grämkow
Dipl.Chem.Dr. Heyn Dipl.Phys. Rotermund
Morgan, B.Sc.(Phys.)
Postfach 22 16 11
80506 München (DE)**

(56) References cited:
EP-A- 0 105 511        EP-A- 0 121 792
EP-A- 0 175 154

• CONFERENCE RECORD OF THE 1986 IEEE IND.
APPL. SOC. ANNUAL MEETING, vol. 1, 3 October
1986, DENVER, US, pages 80 - 85 R.D. LORENZ
ET AL 'SYNTHESIS OF A STATE VARIABLE
MOTION CONTROLLER FOR HIGH
PERFORMANCE FIELD ORIENTED INDUCTION
MACHINE DRIVERS'
• PATENT ABSTRACTS OF JAPAN, vol. 10, no.
213 (E-422), 25 July 1986; & JP-A-61 052 176

**Description**

BACKGROUND OF THE INVENTION

Field of the Invention

The present invention relates generally to a control system for controlling revolution speed of an electric motor, such as an induction motor. More specifically, the invention relates to a motor speed control system with an improved precision in speed control by compensating error factors which may otherwise cause error is motor speed control.

Description of the Background Art

As is well known, variable speed electric motors have been applied in various facilities, such as an elevator car drive system and so forth. In case that the electric motor, such as an induction motor is employed for an elevator car drive system, revolution speed of the electric motor has to be controlled according to a preset known schedule including acceleration stage and deceleration stage. In order to control the revolution speed of the electric motor, various control systems have been employed. The control system typically comprises an electric power converter and inverter for driving the electric motor at a controlled speed. The converter typically comprises a direct current (DC) rectifier for rectifying three-phase alternating current (AC) power and for supplying the rectified DC power to the inverter. The inverter comprises a plurality of pair of series-connected switching element to generate an adjustable frequency output. In many applications, such as frequency adjustment is effected through a control circuit which employs a pulse width modulated (PWM) control technologies for producing variable frequency gate output to periodically switch the motor at a various speed. In the practical control, the electric motor is driven in motoring mode in the acceleration stage of the elevator car driving schedule for increasing the motor speed, and in braking mode in the deceleration stage of the elevator car driving schedule for decreasing the motor speed.

For adjusting the inverter output frequency and amplitude, various control technologies have been employed, such as proportional/integral (PI) control, vector control and so forth. In general, the motor speed control has been performed employing FEEDBACK or CLOSED LOOP control technologies for adjusting the motor revolution speed to a desired speed which is determined according to the preset motor drive schedule. For this, the actual revolution speed of the electric motor is monitored and compared with the desired speed to produce a speed error signal. Based on this speed error signal, PI control is performed for reducing the error to zero.

Besides PI control technologies, vector control technologies have also been employed in the motor speed control. It is basic idea of the vector control is to divide a primary current into an excitation current and a secondary current to control independently of each other. The flux of the excitation current and the vector of the secondary current are so established as to cross perpendicularly to each other. For improving response characteristics and precision in vector control, interference between the secondary flux component and secondary current component is avoided. This interference avoidance technologies has been disclosed in Japanese Patent First (unexamined) Publication 59-165982, for example.

In such vector control, basic electric equation illustrating the induction motor by two axes d - q rotating at electric angular velocity $\omega$ as follow:

$$\begin{bmatrix} v_1d \\ v_1q \\ 0 \\ 0 \end{bmatrix} = \begin{bmatrix} R_1+L_1P & -\omega L_1 & MP & -\omega M \\ \omega L_1 & R_1+L_1P & \omega M & MP \\ MP & -\omega_s M & R_2+L_2P & -\omega_s L_2 \\ \omega_s M & MP & \omega_s L_2 & R_2+L_2P \end{bmatrix} \begin{bmatrix} i_1d \\ i_1q \\ i_2d \\ i_2q \end{bmatrix} \quad \ldots \text{(1)}$$

On the other hand, the torque T can be illustrated by the following equation

$$T = K \times (i_2 d \times i_1 q - i_2 q \times i_1 d) \tag{2}$$

where $V_1 d$, $V_1 q$ are primary voltage of d axis and q axis;

$i_1 d$, $I_1 q$ are primary current of d axis and q axis;

$i_2 d$, $I_2 q$ are secondary current of d axis and q axis;

$R_1$, $R_2$ are primary and secondary resistances;

$L_1$, $L_2$ are primary and secondary inductances;

M is relative inductance of primary and secondary inductances;

P is d/dt

$\omega_s$ is slip frequency; and

K is constant.

In the equation set forth above, the q axis is set as the axis of the secondary current and d axis is set as the axis of the flux. Mutual interference of the secondary flux and the secondary current is compensated in order to derive the primary voltages $V_1 d$ and $V_1 q$ based on the excitation current command $i_O^*$ and torque current command $i_T^*$. In the practical vector control, angular velocity $\omega_r$ of a rotor in the electric motor is monitored by means of a pick-up. The monitored angular velocity $\omega_r$ is compared with the speed command $\omega^*$ to derive the torque current command $i_T^*$ Based on this torque current command $iT^*$, the excitation current command $i_O^*$, and secondary time constant $T_2$, slip frequency $\omega_s$ is derived by the following equation:

$$\omega_s = i_T{}^*/(T_2 \times i_O{}^*)$$

Then, a power source angular frequency $\omega_0$ is derived by adding the slip frequency $\omega_s$ derived as above to the angular velocity $\omega_r$ of the rotor of the motor. Then, sin wave signal $SIN_{\omega O}t$ and cos wave signal $COS_{\omega O}t$ respectively having power source frequency $\omega_O$ are produced. Utilizing the sin wave signal $SIN_{\omega O}t$ and the cos wave signal $COS_{\omega O}t$, the voltage signal $V_1 d$ and $V_1 q$ for the axes d - q is derived on the basis of the excitation current command $i_O^*$ and the torque current command $i_T^*$. Theses primary voltages $V_1 d$ and $V_1 q$ are 2/3 phase converted to generate three phase voltages $ea^*$, $eb^*$ and $ec^*$. PWM control for the inverter is thus performed by the three phase voltages $ea^*$, $eb^*$ and $ec^*$ and a triangular wave in a known manner.

Though such vector control is generally successful to improve the response characteristics in satisfactory level. However, due to presence of core loss, which is included in the torque current vector, the primary current in the braking mode becomes excessively smaller than normal value in relation to the primary current in the motoring mode. This clearly affect precision in motor speed control.

## SUMMARY OF THE INVENTION

Therefore, it is an object of the present invention to provide a control system for controlling revolution speed of an electric motor with improved precision.

In order to accomplish the aforementioned and other objects, a motor speed control system for an induction motor, comprises:

the induction motor;

a motor driving circuit for applying power to drive the motor,

a sensor means associated with the indication motor, for monitoring a revolution speed thereof and producing a motor speed indicative signal; and

a vector controlling means for controlling a flux-axis primary current $II_q$, a torque-axis primary current $II_d$ and slip frequency $\omega s$ to establish the following condition:

$$II_q = Io \text{ (constant)};$$

$$II_d = -(I_T + I_o{}'); \text{ and}$$

$$\omega s = (R_2 + - Srm)/L_2 \times I_T/I_o - Srm/M \times \{(I_T + I_o{}')/I_o\}$$

where $I_o$ is a set excitation current value;

IT is a set torque current value;

$I_o{}'$ is a core loss current value;

$R_2$ is a secondary resistance;
S is is slip;
rm is a core loss resistance;
$L_2$ is a secondary inductance; and
M is a relative inductance

Preferably, the vector controlling means corrects the set torque current value $I_T$ based on a torque command T to establish the following equation:

$$iT = (-B + \sqrt{B^2 + 4 \times T/Kr \times A})/2A$$

$$\text{where } A = rmM^2/\omega L_2 \times (1/M - 1/L_2),$$

$$B = (1 + rm^2/\omega^2 M^2) \times M^2/L_2 \times I_o$$

## BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

Fig. 1 is a block diagram of the first embodiment of a motor speed control system according to the present invention;
Fig. 2 is a block diagram of the second embodiment of a motor speed control system according to the present invention; and
Fig. 3 is a block diagram of the third embodiment of a motor speed control system according to the present invention.

## DESCRIPTION OF THE PREFERRED EMBODIMENT

Referring now to the drawings,

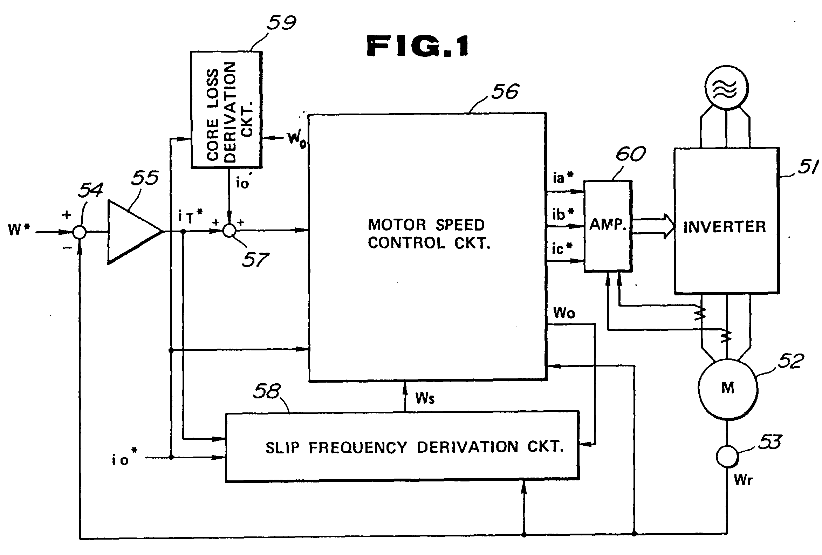

Fig. 1 shows the first embodiment of the motor speed control system according to the present invention. As will be appreciated, the shown embodiment is employs a vector control technology in controlling revolution speed of the electric motor. In the specific embodiment, a pulse-width-modulation (PWM) type inverter 51 is employed for controlling drive of an induction motor 52. The induction motor has a rotor, angular velocity $\omega r$ of which is monitored by means of a pick-up 53. The rotor angular velocity indicative output of the pick-up 53 is fed back to a subtractor 54, to which a motor speed command $\omega^*$ is input. The subtractor 54 derives an error between the motor speed command $\omega^*$ and the rotor angular velocity indicative signal $\omega r$ to input a speed error signal to a speed control amplifier 55 which comprises a proportional/integral (PI) amplifier. The speed control amplifier 55 outputs a torque current command $i_T^*$. The torque current command $i_T^*$ is fed to a motor speed control circuits 56 via an adder 57. The motor speed control circuit 56 also receives the rotor angular velocity indicative signal $\omega r$ from the pick-up 53.

The torque current command $i_T^*$ of the speed control amplifier 55 is also fed to a slip frequency derivation circuit 58. To the slip frequency derivation circuit 58 also receives an excitation current command $i_o^*$ which is also fed to an core loss derivation circuit 59.

The motor speed control circuit 56 outputs a power source angular frequency indicative signal $\omega 0$ to the slip frequency derivation circuit 58 and to the core loss derivation circuit 59. The core loss derivation circuit 59 derives the core loss current indicative data Io' based on inputs to input the core loss indicative signal Io' to the adder 57. On the other hand, the slip frequency derivation circuit 58 derives a slip frequency indicative data $\omega s$ to input to the motor speed control circuit 56.

The motor speed control circuit 56 derives current control signals ia*, ib* and ic* for commanding torque current for respective phase currents to be supplied to the induction motor 52. The current control signals ia*, ib* and ic* are fed to a current control amplifier 60 to control the inverter operation.

Here, it is assumed that the a primary current of an axis of flux of the induction motor 52 is $i_l q$, and a primary current of a torque axis which extends across the flux axis is $i_l d$. These primary currents $i_l q$ and $i_l d$ are illustrated respectively by:

$$i_l q = I0 \text{ (constant)}$$

$$i_l d = -(I_T - I_o')$$

Furthermore, the slip frequency $\omega s$ can be described by:

$$\omega s = (R_2 + - Srm)/L_2 \times I_T{}^*/I_o{}^* - Srm/M \times (I_T{}^* + I_o{}')/I_o$$

where $R_2$ is secondary resistance,
S is slip = $(\omega 0 - \omega r)/\omega 0$
rm is core loss resistance,
$L_2$ is secondary inductance, and
M is a relative inductance.

$$I_o{}' = rm/\omega 0M \times I_o{}^*$$

It should be appreciated that though the shown embodiment is described with taking the core loss resistance rm as fixed value, it can be arithmetically derived since the resistance rm is a function of a frequency.

The motor speed control circuit 56 performs arithmetic operation according to the following equations:

$$\omega 0 = \omega s + \omega r$$

$$|I_1| = \sqrt{I_T{}'^2 + I_o{}^{*2}}$$

$$\phi = \tan^{-1}(I_T{}'/I_o{}^*)$$

on the basis of the inputs, i.e. the torque current command $I_T{}'$ which is a sum value of the torque current command $I_T{}^*$ and the core loss current indicative data $I_o{}'$, the excitation current command $I_o{}^*$, the slip frequency $\omega s$ and the rotor angular velocity indicative data $\omega r$. Based on these data, the current control signals ia\*, ib\* and ic\* are derived by:

$$ia^* = \sqrt{2} \times |I_1| \times \sin(\omega 0t + \phi)$$

$$ib^* = \sqrt{2} \times |I_1| \times \sin(\omega 0t + \phi - 2/3 \times \pi)$$

$$ic^* = \sqrt{2} \times |I_1| \times \sin(\omega 0t + \phi + 2/3 \times \pi)$$

These current control signals ia\*, ib\* and ic\* are used as torque current command for feedback controlling output current of the inverter 51.

It should be appreciated that, according to the shown embodiment, which employs core loss factor in deriving the torque current command, can be described by the following equation:

| $v_1 d$ | | $R_1 + rm + L_1 P$ | $-\omega L_1$ | $MP$ | $-\omega M$ | $i_1 d$ |
|---------|---|---|---|---|---|---|
| $v_1 q$ | = | $\omega L_1$ | $R_1 + rm + L_1 P$ | $\omega M$ | $MP$ | $i_1 q$ |
| $0$ | | $MP$ | $-\omega_s M$ | $R_2 + srm + L_2 P$ | $-\omega_s L_2$ | $i_2 d$ |
| $0$ | | $\omega_s M$ | $MP$ | $\omega_s L_2$ | $R_2 + srm + L_2 P$ | $i_2 q$ |

As will be appreciated herefrom, by the shown embodiment, since the torque current commands are derived with taking the core loss into account, influence by the core loss which otherwise degrades accuracy in non-interference control, can be avoided to provide for satisfactory accuracy in motor speed vector control.

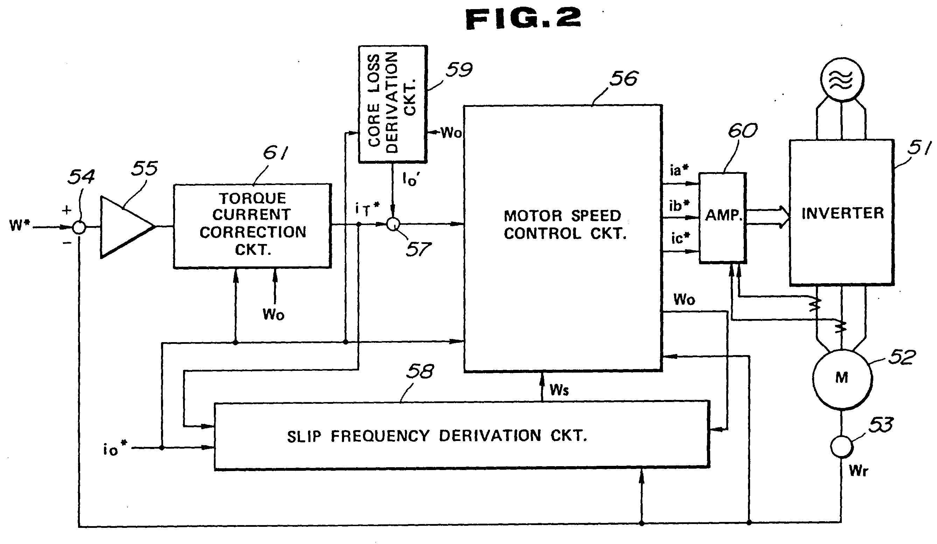

Fig. 2 shows the second embodiment of the motor speed control system according to the present invention. As will be seen from Fig. 2, the circuit construction of the shown second embodiment of the motor speed control system is essentially the same as that of the foregoing first embodiment of the motor speed control system except for a torque current correcting circuit 61. Therefore, the common circuit element to that of the foregoing first embodiment will be represented by the same reference numerals and detailed discussed thereabout will be neglected for simplification of the disclosure.

In the shown construction, the torque current correction circuit 61 is interposed between the speed control amplifier 55 and the adder 57. The torque current correction circuit 61 receives the excitation current command $i_o{}^*$ and the power source angular frequency indicative signal $\omega 0$ as well as the torque current command $i_T{}^*$ from the speed control amplifier 55. The torque current correction circuit 61 performs correction of the torque current command $i_T{}^*$ according to the following equation:

$$I_T{}^{*'} = (-B + \sqrt{B^2 + 4 \times T/Kr \times A}\,)/2A$$

$$\text{where } A = rmM^2/\omega L_2 \times (1/M - l/L_2),$$

$$B = (1 + rm^2/\omega^2 M^2) \times M^2/L_2 \times I_o$$

Therefore, in the shown embodiment, the corrected torque current command $i_T{}^{*'}$ is processed in the motor speed control circuit 56 in place of the torque current command $i_T{}^*$.

Other control operations performed in the second embodiment of the motor speed control system of Fig.2 is identical to that discussed with respect to the first embodiment of the motor speed control system. Therefore, it is not necessary to discuss again.

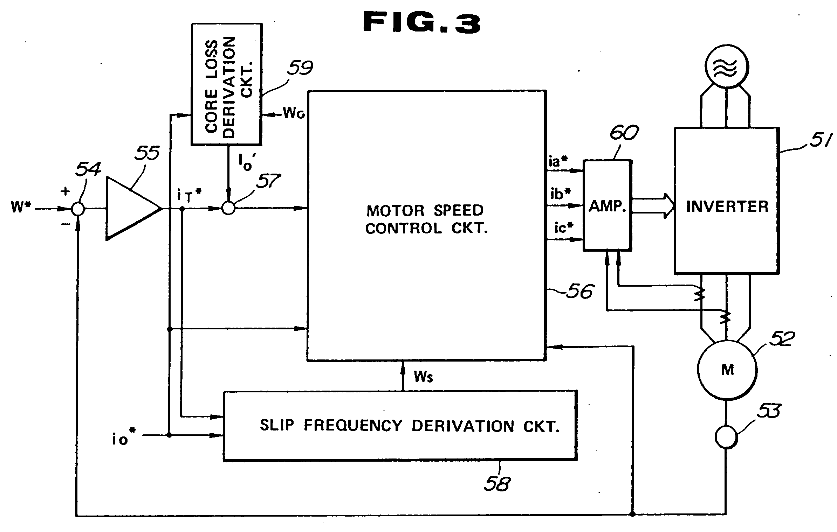

On the other hand, Fig. 3 shows a modification of the aforementioned first embodiment of the motor speed control system. In this modification, the slip frequency derivation circuit 58' is modified from that disclosed with respect to the first embodiment.

In the modified slip frequency derivation circuit 58', the slip frequency indicative data ws is derived according to the following equation:

$$\omega s = R_2/L_2 \times I_T/I_o$$

This modified circuit is useful when the core loss resistance in the slip frequency $\omega s$ can be ignored. In such case, the torque can be calculated by:

$$T = K_T \times M_2/L_2 \times I_o \times I_1$$

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

1. A motor speed control system for an induction motor (52), comprising:

   said induction motor (52);
   a motor driving circuit (51) for applying power to drive the motor (52);
   a sensor means (53) associated with said indication motor (52), for monitoring a revolution speed thereof and producing a motor speed indicative signal; and
   a vector controlling means (56) for controlling a flux-axis primary current $II_q$, a torque-axis primary current $II_d$ and slip frequency $\omega s$ to establish the following condition:

   $$I1_q = Io \text{ (constant)};$$

   $$II_d = -(I_T + I_o'); \text{ and}$$

   $$\omega s = (R_2 + Srm)/L_2 \times I_T/I_o - Srm/M \times ((I_T + I_o')/I_o)$$

   where $I_o$ is a set excitation current value;
   $I_T$ is a set torque current value;
   $I_o'$ is a core loss current value; $I_o' = rm/\omega_o M \times I_o$
   $R_2$ is a secondary resistance;
   S is a slip;
   rm is a core loss resistance;
   $L_2$ is a secondary inductance; and
   M is a relative inductance

2. A motor speed control system as set forth in claim 1, wherein said vector controlling means (56) corrects said set torque current value I$_T$ based on a torque command T to establish the following equation:

$$iT = (-B + \sqrt{B^2 + 4 \times T/Kr \times A})/2A$$

$$\text{where } A = rmM^2/\omega L_2 \times (1/M - 1/L_2),$$

$$B = (1 + rm^2/\omega^2 M^2) \times M^2/L_2 \times I_o.$$

**Patentansprüche**

1. Ein Motorgeschwindigkeitsregelsystem für einen Induktionsmotor (52) mit:

dem Induktionsmotor (52);
einem Motoransteuerungsschaltkreis (51) zum Anlegen von Leistung, um den Motor (52) anzutreiben,
ein Sensormittel (53), das zu dem Induktionsmotor (52) gehört, zum Überwachen einer Umdrehungsgeschwindigkeit davon und Erzeugen eines motorgeschwindigkeitsindikativen Signals; und
einem Vektorregelmittel (56) zum Regeln eines Flußachsenprimärstroms II$_q$, eines Drehmomentachsenprimärstromes II$_d$ und einer Schlupffrequenz $\omega$s, um die folgende Bedingung herbeizuführen:

$$II_q = Io \text{ (konstant);}$$

$$II_d = -(I_T + I_o'); \text{ und}$$

$$\omega s = (R_2 + Srm)/L_2 \times I_T/I_o - Srm/M \times \{(I_T + I_o')/I_o\}$$

wobei

I$_o$ ein eingestellter Erregungsstromwert ist;
I$_T$ ein eingestellter Drehmomentstromwert ist;
I$_o'$ ein Kernverluststromwert ist; I$_o' = rm/\omega_o M \times I_o$
R$_2$ ein sekundärer Widerstand ist;
S ein Schlupf ist;
rm ein Kernverlustwiderstand ist;
L$_2$ eine sekundäre Induktivität ist; und
M eine relative Induktivität ist.

2. Ein Motorgeschwindigkeitsregelsystem nach Anspruch 1, worin das Vektorregelmittel (56) den Drehmomentstromwert I$_T$ basierend auf einem Drehmomentbefehl T korrigiert, um die folgende Gleichung herbeizuführen:

$$i_T = (-B + \sqrt{B^2 + 4 \times T/Kr \times A})/2A$$

$$\text{wobei } A = rmM^2/\omega L_2 \times (1/M - 1/L_2),$$

$$B = (1 + rm^2/\omega^2 M^2) \times M^2/L_2 \times I_o.$$

**Revendications**

1. Ensemble de commande de vitesse d'un moteur d'induction (52), comprenant :

un moteur d'induction (52),
un circuit (51) de pilotage de moteur destiné à appliquer de l'énergie pour l'entraînement du moteur (52),
un dispositif capteur (53) associé au moteur d'induction (52) et destiné à contrôler sa vitesse de rotation et à produire un signal représentatif de la vitesse du moteur, et
un dispositif de commande vectorielle (56) destiné à commander un courant primaire d'axe de flux I1$_q$, un courant primaire d'axe de couple I1$_d$ et une fréquence de glissement $\omega$s pour l'établissement des conditions suivantes :

$$I1_q = Io \text{ (constante)},$$

$$I1_d = - (I_T + I_o'), \text{ et}$$

$$\omega s = (R_2 + Srm)/L_2.I_T/I_o - Srm/M.\{(I_T + I_o')/I_o\}$$

$I_o$ étant une valeur déterminée du courant d'excitation, $I_T$ une valeur déterminée du courant de couple, $I_o'$ une valeur du courant due aux pertes dans le noyau telle que $I_o' = rm/\omega_o M.I_o$, $R_2$ une résistance secondaire, S un glissement, rm une résistance due aux pertes dans le noyau, $L_2$ une inductance secondaire et M une inductance relative.

2. Ensemble de commande de vitesse du moteur selon la revendication 1, dans lequel le dispositif de commande vectorielle (56) corrige la valeur déterminée du courant de couple $I_T$ d'après une commande de couple T pour l'établissement de l'équation suivante

$$i_T = (-B + \sqrt{B^2 + 4.T/Kr.A}\,)/2A$$

$$\text{avec } A = rmM^2/\omega L_2. (1/M - 1/L_2)$$

$$\text{et } B = (1 + rm^2/\omega^2 M^2).M^2/L_2.I_o.$$

# FIG.1

# FIG.2

# FIG.3

CORE LOSS DERIVATION CKT.

59

— $W_G$

$I_o'$

55

54

$W^*$

+ −

57

$i_T^*$

MOTOR SPEED CONTROL CKT.

$ia^*$

$ib^*$

$ic^*$

60

AMP.

51

INVERTER

56

$W_s$

$io^*$

SLIP FREQUENCY DERIVATION CKT.

58

52

M

53

EP 0 526 915 B1